# EUROPÄISCHE PATENTSCHRIFT

(11) **EP 3 318 461 B1**
(45) Veröffentlichungstag und Bekanntmachung des Hinweises auf die Patenterteilung: **26.01.2022**
(21) Anmeldenummer: 17199811.5
(22) Anmeldetag: 03.11.2017
(51) Int. Cl.: B60W 30/02

(54) **ABSCHLEPPASSISTENZ FÜR EIN KRAFTFAHRZEUG**
TOWING ASSISTANCE FOR A MOTOR VEHICLE
DISPOSITIF D'AIDE AU REMORQUAGE POUR UN VÉHICULE AUTOMOBILE

(30) Priorität: 04.11.2016 DE 102016221694
(43) Veröffentlichungstag der Anmeldung: 09.05.2018
(73) Patentinhaber: AUDI AG, 85045 Ingolstadt (DE)
(72) Erfinder: Khlifi, Rachid, 85748 Garching (DE)

(56) Entgegenhaltungen:
- EP-A1- 2 921 364
- EP-A1- 3 059 607
- WO-A1-2012/171536
- DE-A1-102014 107 917
- DE-A1-102015 004 468
- US-A1- 2011 087 402
- US-A1- 2012 193 153

## Beschreibung

Die Erfindung betrifft ein Verfahren zum Betreiben eines Fahrerassistenzsystems zumindest eines Kraftfahrzeugs in einem Abschlepp-Gespann mit einem ersten Fahrzeug und einem zweiten Fahrzeug. Die Erfindung betrifft auch ein Fahrerassistenzsystem für ein Kraftfahrzeug, mit einer Sensoreinrichtung, die in einem Normalbetriebsmodus und in einem vom Normalbetriebsmodus verschiedenen Abschleppmodus betreibbar ist.

Abschleppen ist das Ziehen eines liegengebliebenen Fahrzeugs im Rahmen der Nothilfe mit dem Ziel der Ortsveränderung zur Behebung der Betriebsunfähigkeit des liegengebliebenen Fahrzeugs, der Verwertung des liegengebliebenen Fahrzeugs oder der Vernichtung des liegengebliebenen Fahrzeugs. Eine Betriebsunfähigkeit liegt dabei infolge nicht behebbarer technischer Mängel vor, wenn die betriebssichere oder bestimmungsgemäße Verwendung des Fahrzeugs nicht mehr möglich ist und diese auch nicht vor Ort ohne größeren Aufwand wiederhergestellt werden kann.

Ein Abschlepp-Gespann stellt dabei ein Hindernis und zugleich eine Gefahr im Straßenverkehr dar. Neben einer Vielzahl von zu berücksichtigenden Faktoren, wie beispielsweise speziellen Problematiken bei liegengebliebenen Fahrzeugen mit Automatikgetrieben, ergibt sich allgemein eine Gefahr, wenn das ziehende oder abschleppende Fahrzeug abrupt bremst oder mit einer nicht angepassten Geschwindigkeit beispielsweise in eine Kurve fährt. Bei einer Bremsung ist der im Allgemeinen sehr geringe Abstand des abgeschleppten Fahrzeugs zu dem abschleppenden Fahrzeug von nur wenigen Metern, beispielsweise weniger als 2,5 Metern, problematisch, da hier eine sehr schnelle Reaktion des Fahrers des abgeschleppten Fahrzeugs erforderlich ist. Überdies ist oft in einem liegengebliebenen Fahrzeug eine Bremsunterstützung wie beispielsweise ein Bremskraftverstärker nicht einsatzbereit, sodass es selbst für einen erfahrenen Fahrer schwierig sein kann, auf ein abruptes Bremsen des abschleppenden Fahrzeugs schnell zu reagieren. Auch im Falle eines Abschleppens mit einer Abschleppstange kann bei höheren Kräften und höheren Geschwindigkeiten keine Garantie zur Haltung des Abstands gegeben werden. Da der Fahrer des abschleppenden Fahrzeugs oft nur wenig Erfahrung als Fahrer in einem Abschlepp-Gespann hat, wird beispielsweise auch leicht mit einer für das abschleppende Fahrzeug allein passenden, aber für das Abschlepp-Gespann unangepassten Geschwindigkeit in eine Kurve eingefahren. Dabei kann beispielsweise ein ungewohntes Lenkverhalten des Abschlepp-Gespann und insbesondere des abgeschleppten Fahrzeugs und die im Vergleich zum einzelnen abschleppenden Fahrzeug erhöhte Masse des Abschlepp-Gespanns zu kritischen Situationen führen.

Im Kontext der unterstützten Abschleppvorgänge offenbart das Dokument EP 2 377 719 A1 eine Abschleppvorrichtung, bei welcher mehrere abstandsmessende Sensoren zum Einsatz kommen, welche einen Abstand einer Traganordnung zum Boden bei einem Anheben des abzuschleppenden Fahrzeugs messen.

In der DE 10 2014 107 917 wird ein Verfahren zum Betreiben eines Fahrerassistenzsystems in einem Abschlepp-Gespann beschrieben, wobei die Sensoreinrichtung von einem Normalbetriebsmodus in einen Abschleppmodus geschaltet wird.

Die Druckschrift US 2011/0087402 A1 beschreibt ein elektronisches Stabilitätskontrollsystem. Mithilfe einer Vielzahl von Sensoren können Signale gewonnen werden, welche auf einen Abstand zwischen einem Fahrzeug und einem Anhänger schließen lassen. Der Anhänger wird dabei von dem Fahrzeug gezogen. Eine Recheneinheit bestimmt in Abhängigkeit von den gemessenen Signalen die Abstände. Mithilfe einer elektronischen Stabilitätskontrolleinheit kann ein Raddrehmoment des Fahrzeugs und Anhängers in Abhängigkeit von dem Abstand kontrolliert werden.

In der DE 10 2011 090 034 A1 wird eine digitale Abschleppstange und ein Verfahren zum Abschleppen eines elektrisch betriebenen Fahrzeugs beschrieben, bei welchem ein Abstand zwischen zwei Fahrzeugen während eines Abschleppvorgangs durch einen fahrzeugseitigen Sensor erfasst wird.

Aus der DE 10 2014 003 256 A1 ist schließlich ein Verfahren zum Verhindern der Ausgabe von Kollisionswarnungen und/oder Abstandswarnungen während eines Abschleppvorgangs bekannt, bei welchem eine Abschleppsituation durch ein Bestimmen eines Abstands zwischen einem Abschleppfahrzeug und einem abgeschleppten Fahrzeug ermittelt wird.

Der Erfindung liegt die Aufgabe zugrunde, die Verkehrssicherheit bei einem Abschleppvorgang zu erhöhen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Betreiben eines Fahrerassistenzsystems zumindest eines Kraftfahrzeugs in einem Abschlepp-Gespann mit, insbesondere aus, einem ersten abschleppenden Kraftfahrzeug und einem zweiten abgeschleppten Kraftfahrzeug. Insbesondere kann es sich bei dem ersten Kraftfahrzeug um das abschleppende Kraftfahrzeug und bei dem zweiten Kraftfahrzeug um das abgeschleppte Kraftfahrzeug handeln.

Ein erster Verfahrensschritt ist hier ein Aktivieren eines von einem Normalbetriebsmodus verschiedenen Abschleppmodus' zumindest einer Sensoreinrichtung, die eine Radar-Sensoreinrichtung aufweist, des Fahrerassistenzsystems. Dabei kann insbesondere eine Ortsauflösung der Sensoreinrichtung in dem Abschleppmodus im Vergleich zu der Ortsauflösung in dem Normalbetriebsmodus erhöht sein. Beispielsweise kann die Ortsauflösung 5 Zentimeter oder weniger als 5 Zentimeter betragen, beispielsweise 3 oder 2 Zentimeter. Die zumindest eine Sensoreinrichtung kann beispielsweise eine erste und eine zweite Sensoreinrichtung umfassen, wobei die erste Sensoreinrichtung in dem ersten und die zweite Sensoreinrichtung in dem zweiten Kraftfahrzeug angeordnet ist.

Ein nächster Verfahrensschritt ist ein Erfassen des in dem Abschlepp-Gespann hinter oder vor dem eigenen Kraftfahrzeug, bei welchem es sich um das erste oder das zweite Kraftfahrzeug handeln kann, angeordneten anderen Kraftfahrzeugs, bei welchem es sich entsprechend um das zweite oder erste Kraftfahrzeug handeln kann, durch die in den Abschleppmodus versetzte zumindest eine Sensoreinrichtung. Die Sensoreinrichtung ist dabei folglich in dem eigenen Kraftfahrzeug angeordnet. Es kann jedoch vorgesehen sein, dass beide Kraftfahrzeuge eine, nämlich jeweils die erste oder zweite, Sensoreinrichtung aufweisen. In diesem Fall kann entsprechend durch die in den Abschleppmodus versetzte erste Sensoreinrichtung das hinter oder vor dem ersten Kraftfahrzeug angeordnete zweite Kraftfahrzeug erfasst werden und zugleich durch die in den Abschleppmodus versetzte zweite Sensoreinrichtung das hinter oder vor dem zweiten Kraftfahrzeug angeordnete erste Kraftfahrzeug. Bei dem Erfassen kann beispielsweise eine Kontur des anderen Kraftfahrzeugs erfasst werden. Anhand einer solchen Kontur kann die im nächsten Absatz eingeführte Lageinformation besonders genau ermittelt werden.

Ein nächster Verfahrensschritt ist sodann ein Bereitstellen einer Lage-Information über das erfasste andere Kraftfahrzeug an eine weitere Einrichtung des Fahrerassistenzsystems durch die Sensoreinrichtung. Die weitere Einrichtung kann dabei Teil des ersten Kraftfahrzeugs und/oder Teil des zweiten Kraftfahrzeugs sein, also Teil des eigenen Kraftfahrzeugs und/oder des anderen Kraftfahrzeugs. Das Bereitstellen der Lageinformation kann auch an eine erste weitere Einrichtung des ersten Kraftfahrzeugs und/oder an eine zweite weitere Einrichtung des zweiten Kraftfahrzeugs erfolgen. Die Lageinformation kann hier beispielsweise eine Information darüber sein, wo das erfasste andere Kraftfahrzeug verortet ist, insbesondere relativ zu dem eigenen Kraftfahrzeug verortet ist. Entsprechend kann die Lageinformation beispielsweise einen Abstand und/oder eine Position und/oder eine Orientierung des erfassten Kraftfahrzeugs sowie eine entsprechende Veränderung des Abstands und/oder der Position und/oder der Orientierung des erfassten Kraftfahrzeugs umfassen. Die Lageinformation kann auch eine Geschwindigkeitsinformation oder eine geometrische Information wie beispielsweise eine Höheninformation oder eine Größeninformation über das erfasste andere Kraftfahrzeug umfassen.

Das hat den Vorteil, dass eine Veränderung der relativen Lage der beiden Kraftfahrzeuge zueinander und/oder andere von der Lageinformation repräsentierte Informationen, beispielsweise eine Breite des abgeschleppten Kraftfahrzeugs, an das Fahrerassistenzsystem bereitgestellt werden, welches somit diese Information in einer oder mehreren weiteren Funktionalitäten berücksichtigen kann. Damit wird ermöglicht, dass beispielsweise eine Information oder eine Warnung an einen Fahrer des Abschlepp-Gespanns ausgegeben wird, um diesem ein Gefahrenpotential zu verdeutlichen oder ihn auf ein Gefahrenpotential hinzuweisen. Außerdem kann das Fahrerassistenzsystem auch anhand der Lageinformation automatisch in ein Fahrverhalten des Abschlepp-Gespanns eingreifen. Beispielsweise kann so, falls die Lageinformation einen Abstand zwischen den beiden Kraftfahrzeugen betrifft oder umfasst, einem Fahrer des abgeschleppten Kraftfahrzeugs angezeigt werden, nach Möglichkeit einen größtmöglichen Abstand zu dem vorausfahrenden abschleppenden Kraftfahrzeug einzuhalten. Unterschreitet nun beispielsweise der Abstand einen vorgegebenen Grenzwert, so kann dem Fahrer eine Warnung angezeigt oder ausgegeben werden, beispielsweise dass nun bei einer starken Bremsung des abschleppenden Kraftfahrzeuges eine konkrete Gefahr droht. Unterschreitet beispielsweise der Abstand einen weiteren Mindest-Grenzwert, so kann beispielsweise das Fahrerassistenzsystem das abgeschleppte Kraftfahrzeug automatisch bremsen und/oder Vor-Crash-Systeme (sogenannte Pre-Crash-Systeme), welche das Kraftfahrzeug auf einen unvermeidlichen Aufprall vorbereiten, aktivieren. Beispielsweise kann so ein Gurtstraffer aktiviert und/oder ein Airbag in eine erhöhte Bereitschaft versetzt oder initialisiert werden. Dadurch, dass die Sensoreinrichtung in dem Abschleppmodus betrieben wird, kann diese in dem Abschleppmodus auch auf die speziellen Erfordernisse, welche bei dem Abschleppen auftreten, angepasst werden. Somit kann entsprechend eine bereits in dem Kraftfahrzeug integrierte Sensoreinrichtung, welche normalerweise auf ein anderes Nutzungsszenario optimiert ist, ohne Nachteile bei dem Abschleppen verwendet werden.

Es ist vorgesehen, dass die Sensoreinrichtung eine Radar-Sensoreinrichtung aufweist, welche in dem Abschleppmodus mit einer im Vergleich zum Normalbetriebsmodus erhöhten Frequenzbandweite betrieben wird. Insbesondere kann die Radar-Sensoreinrichtung im Abschleppmodus mit einer Frequenzbandbreite von mehr als 3 Gigahertz, bevorzugt 4 Gigahertz oder mehr betrieben werden. Insbesondere kann dabei eine Zentralfrequenz der Radarsensoreinrichtung zwischen 70 und 85 Gigahertz, bevorzugt zwischen 76 und 80 Gigahertz liegen. Derartige Radar-Sensoreinrichtungen sind in Kraftfahrzeugen aus dem Überwachen einer Fahrzeugumgebung bekannt. Dabei kommen sie typischerweise in den Anwendungsbereichen einer Einparkhilfe, einer Totwinkelüberwachung, einer Vor-Crash-Erfassung und bei zähflüssigem Verkehr, insbesondere in Stopp-and-Go-Szenarien zum Einsatz. Die Radar-Sensoreinrichtung kann dabei einen oder mehrere Radarsensoren aufweisen, welche in den Stoßfängern des jeweiligen Kraftfahrzeugs hinter einer Kunststoffabdeckung eines Stoßfängers platziert sind.

Die Radarsensoren können dabei in einem jeweiligen separaten Gehäuse angeordnet und an dem Stoßfänger befestigt sein. Der zumindest eine Radarsensor kann dabei einen Hochfrequenz- und/oder einen Niederfrequenzteil aufweisen. Der Hochfrequenzteil generiert dabei dann hochfrequente Signale im Bereich von 10 bis 80 Gigahertz. Die hochfrequenten Signale werden über entsprechende Antennen der Radarsensoreinrichtung versandt und empfangen. Die hochfrequenten, empfangenen Signale können dabei umgesetzt und auf eine Niederfrequenz heruntergemischt werden. Die daraus resultierenden niederfrequenten Signale können in dem Niederfrequenzteil verarbeitet werden. Alternativ kann der zumindest eine Radarsensor in einem Gehäuse angeordnet sein, welches an einem Karosserieteil, also nicht am Stoßfänger, angeordnet ist.

Durch die erhöhte Frequenzbandbreite wird eine erhöhte Ortsauflösung, beispielsweise eine Ortsauflösung von 5 Zentimetern oder weniger, beispielsweise von 4 Zentimetern, erreicht. Im Gegensatz dazu wird in einem Normalbetriebsmodus bekannter Radar-Sensoreinrichtungen typischerweise eine kleinere Frequenzbandbreite genutzt, um so bei schlechterer Ortsauflösung eine größere Reichweite zu ermöglichen. Dementsprechend ist dann in dem Normalbetriebsmodus in dem Nahbereich durch die Radar-Sensoreinrichtung keine den Anforderungen einer Abstandsüberwachung bei einem Abschleppvorgang entsprechende Auflösung realisierbar. So wird beispielsweise bei niedriger Frequenzbandbreite in einem Normalbetriebsmodus von einer Radar-Sensoreinrichtung, welche bei 77 Gigahertz betrieben wird, eine Ortsauflösung von 1 Meter erreicht und von einer Radarsensoreinrichtung, die bei 24 Gigahertz betrieben wird, eine Ortsauflösung von 1,7 Meter erreicht. Diese niedrige Abstandsauflösung erschwert die genaue Vermessung von Hindernissen und Objekten der direkten Umgebung des Kraftfahrzeugs, und somit auch bei einem Abschleppen. Entsprechend kann in dem Normalbetriebsmodus durch eine Radarsensoreinrichtung üblicherweise nur eine Präsenzerkennung durchgeführt werden, aber keine genauere Vermessung wie beispielsweise eine Konturerfassung des Kraftfahrzeugs. Durch das Umschalten zwischen den verschiedenen Betriebsmodi, hier dem Normalbetriebsmodus und dem Abschleppmodus, kann so die Radar-Sensoreinrichtung mit unterschiedlichen Frequenzbandbreiten betrieben werden. So kann beispielsweise bei einem modulierten Dauerstrich-Radar mit unterschiedlichen Rampen und Frequenzbandbreiten eine Vermessung der direkten Umgebung des Kraftfahrzeugs durchgeführt werden. Dadurch kann sowohl ein Fernfeld als auch ein Nahfeld der Radarsensoreinrichtung genau vermessen werden, indem zwischen den unterschiedlichen Frequenzbandbreiten umgeschaltet wird.

Es ergibt sich somit der Vorteil, dass das jeweils andere Kraftfahrzeug durch die Radar-Sensoreinrichtung besonders genau erfasst werden kann. So kann beispielsweise auch die Kontur des anderen Kraftfahrzeugs erfasst werden, aus welchem sich nicht nur ein Abstand mit hoher Genauigkeit, beispielsweise eine Auflösung von 4 Zentimeter, erfassen lässt, sondern auch eine Breite und eine Höhe sowie entsprechend ein Driften des abgeschleppten Kraftfahrzeugs relativ zu dem abschleppenden Kraftfahrzeug. Unterschreitet so beispielsweise ein mittels der Radar-Sensoreinrichtung vermessener Abstand zwischen den Kraftfahrzeugen eine bestimmte Grenze, so kann sowohl das abschleppende Kraftfahrzeug und/oder das abgeschleppte Kraftfahrzeug auf die Situation spezifisch reagieren, beispielsweise das abgeschleppte und/oder abschleppende Kraftfahrzeug in einer kritischen Verkehrssituation, wenn das Brems- beziehungsweise Lenksystem weiter aktiv ist, rechtzeitig bremsen und/oder lenken und/oder ausweichen. Dabei kann je nach Situation gezielt eine vorgegebene Funktion des Fahrerassistenzsystems des abschleppenden Kraftfahrzeuges und/oder des abgeschleppten Kraftfahrzeuges aktiviert werden. Gerade ein Versatz und/oder ein Abstand des abgeschleppten Kraftfahrzeugs relativ zum abschleppenden Kraftfahrzeug können mittels der Radarsensoren besonders gut überwacht werden und so im Falle einer Extremsituation den Fahrer warnen. So kann beispielsweise bei einer höheren Geschwindigkeit die Gefahr entstehen, dass das abschleppende Kraftfahrzeug durch die Fliehkraft des abgeschleppten Kraftfahrzeugs aus einer stabilen Lage gedrückt wird. Auch kann durch das genaue Ermitteln des anderen Kraftfahrzeugs, beispielsweise seiner Kontur, gegebenenfalls ein Defekt einer mechanischen Kopplung zwischen den beiden Kraftfahrzeugen detektiert werden, und somit durch einen entsprechenden Hinweis weitere kritische Gefahrsituationen vermieden werden. Da eine Radarsensoreinrichtung auch nicht verschmutzt beziehungsweise durch Spritzgut wie beispielsweise eine Gischt bei nasser Fahrbahn nicht beeinträchtigt wird, ist das Erfassen des anderen Kraftfahrzeugs durch die Radar-Sensoreinrichtung auch besonders sicher.

In einer vorteilhaften Ausführungsform ist vorgesehen, dass die Sensoreinrichtung oder insbesondere die erste von zumindest den beiden eingangs erwähnten Sensoreinrichtungen an dem ersten Kraftfahrzeug angeordnet ist und das zweite Kraftfahrzeug durch zumindest einen heckseitigen Sensor, insbesondere einen Radarsensor, erfasst wird. Der zumindest eine heckseitige Sensor ist dabei an dem Heck des ersten Kraftfahrzeugs angeordnet. Im Gegensatz zum Stand der Technik, bei welchem bei einem Abschleppmanöver die gegebenenfalls vorhandenen Hecksensoren einer Sensoreinrichtung des abschleppenden Kraftfahrzeugs abgeschaltet werden, da sie in dem Normalbetriebsmodus in der Abschleppsituation keine nutzbaren Daten aus dem Umfeld liefern können, können die Sensoren hier also im Rahmen des beschriebenen Verfahrens genutzt werden.

Das hat den Vorteil, dass der zumindest eine üblicherweise ohnehin genutzte heckseitige Sensor, beispielsweise der für einen Spurwechselassistenten genutzte heckseitige Sensor, welche ohnehin vorhanden ist, nicht abgeschaltet, sondern vielmehr aufwandsarm genutzt werden kann, um zur Sicherheit im Straßenverkehr beizutragen. Zu den so im Gegensatz zum Stand der Technik nutzbaren Daten zählen beispielsweise der Abstand, eine Drift und eine Geschwindigkeit des anderen Kraftfahrzeugs.

In einer weiteren vorteilhaften Ausführungsform ist vorgesehen, dass die Sensoreinrichtung, insbesondere die eine oder die eine andere Sensoreinrichtung, bevorzugt die zweite von den oben erwähnten zumindest zwei Sensoreinrichtungen, an dem zweiten Kraftfahrzeug angeordnet ist und das erste Kraftfahrzeug durch zumindest einen frontseitigen Sensor, insbesondere einen Radarsensor, erfasst wird. Der zumindest eine frontseitige Sensor ist dabei an der Front des zweiten Kraftfahrzeugs angeordnet. Es wird hier somit im Gegensatz zum Stand der Technik der frontseitige Sensor der Sensoreinrichtung bei dem Abschleppen nicht abgeschaltet, was üblicherweise der Fall ist, da in der Abschleppsituation die frontseitigen Sensoren eines abgeschleppten Kraftfahrzeugs keine verwertbaren Daten über ein Umfeld liefern.

Das hat den Vorteil, dass analog zu dem vorherigen Ausführungsbeispiel ansonsten nicht genutzte Sensoren der Sensoreinrichtung, die beispielsweise für eine Funktion eines Abstandsregeltempomaten eines Fahrerassistenzsystems bereits in dem Kraftfahrzeug vorhanden sind, nicht abgeschaltet werden müssen, sondern auch zur Sicherheit bei dem Abschleppen beitragen können. Zu den so im Gegensatz zum Stand der Technik nutzbaren Daten zählen beispielsweise der Abstand, eine Drift und eine Geschwindigkeit des anderen Kraftfahrzeugs.

Es kann somit vorgesehen sein, dass die Lageinformation von dem abschleppenden Kraftfahrzeug bereitgestellt wird oder von dem abschleppenden Kraftfahrzeug oder aber von beiden Kraftfahrzeugen. Wie im Folgenden noch ausgeführt, kann die entsprechend bereitgestellte Lageinformation dabei durch ein Fahrerassistenzsystem des abschleppenden Kraftfahrzeugs, ein Fahrerassistenzsystem des abgeschleppten Kraftfahrzeugs oder aber durch ein Fahrerassistenzsystem beider Kraftfahrzeuge, welches das Fahrerassistenzsystem des abschleppenden Kraftfahrzeugs als übergeordnetes Master-Fahrerassistenzsystem und das Fahrerassistenzsystem des abgeschleppten Kraftfahrzeugs als untergeordnetes Slave-Fahrerassistenzsystem umfasst, bereitgestellt werden. Dabei können, wie weiter unten noch ausgeführt, die entsprechenden Lageinformationen unter den Fahrerassistenzsystemen der unterschiedlichen Kraftfahrzeuge ausgetauscht oder zwischen diesen übertragen werden, indem diese über eine Datenverbindung gekoppelt werden.

In einer besonders bevorzugten Ausführungsform ist vorgesehen, dass die bereitgestellten Lageinformationen einen Abstand, insbesondere einen Abstand in einer Fahrzeuglängsachse, des anderen Kraftfahrzeugs zu dem eigenen Kraftfahrzeug und/oder eine Veränderung des Abstands und/oder eine relative Geschwindigkeit des anderen Kraftfahrzeugs zu dem eigenen Kraftfahrzeug und/oder einen seitlichen Versatz, eine sogenannte Drift, des anderen Kraftfahrzeugs zu dem eigenen Kraftfahrzeug und/oder eine Breite des anderen Kraftfahrzeugs und/oder eine Höhe des anderen Kraftfahrzeugs und/oder einen Winkel zwischen den Fahrzeuglängsachsen der beiden Kraftfahrzeuge umfasst.

Das hat den Vorteil, dass so die weitere Einrichtung besonders effektiv zum Erhöhen der Verkehrssicherheit beitragen kann, da die genannten Informationen oder Größen sich als besonders hilfreich bei dem Einschätzen von Fahrsituationen erwiesen haben.

In einer anderen vorteilhaften Ausführungsform ist vorgesehen, dass die Lageinformation an zumindest eine weitere Einrichtung des eigenen Kraftfahrzeugs und/oder des anderen Kraftfahrzeugs bereitgestellt wird. Insbesondere kann dies über eine drahtlose Datenverbindung realisiert werden, beispielsweise über eine sogenannte Car-2-Car-Kommunikation oder eine sogenannte Radar-2-Radar-Kommunikation. Die Lageinformation kann also beispielsweise über eine durch die Radarsensoreinrichtungen bereitgestellte drahtlose Verbindung mittels Radarsignalen übertragen werden. Die Lageinformation kann auch über ein Kabel bereitgestellt werden. Mit der zumindest einen weiteren Einrichtung können somit auch mehrere Einrichtungen in den unterschiedlichen Kraftfahrzeugen zu verstehen sein, beispielsweise eine erste weitere Einrichtung in dem ersten Kraftfahrzeug und eine zweite weitere Einrichtung in dem zweiten Kraftfahrzeug. Es kann somit also beispielsweise eine Lageinformation von der ersten Sensoreinrichtung des ersten Kraftfahrzeugs an eine erste weitere Einrichtung des ersten Kraftfahrzeugs und/oder eine zweite weitere Einrichtung des zweiten Kraftfahrzeugs bereitgestellt werden. Entsprechendes gilt für eine von der zweiten Sensoreinrichtung bereitgestellte Lageinformation.

Das hat den Vorteil, dass die jeweilige weitere Einrichtung und damit das jeweilige Fahrerassistenzsystem nicht auf die Sensoreinrichtung des zugehörigen Kraftfahrzeugs beschränkt ist, sondern über die Sensoreinrichtung des anderen Kraftfahrzeugs Informationen, hier die Lageinformation, zur Verfügung gestellt bekommt, die ansonsten nicht verfügbar wären. Damit kann die zusätzliche Lageinformation für ein verbessertes Einschätzen der Fahrsituation und eines möglichen Risikos des Abschlepp-Gespanns genutzt werden, was zu einer verbesserten Sicherheit im Straßenverkehr führt.

In einer besonders vorteilhaften Ausführungsform ist dabei vorgesehen, dass die bereitgestellte Lageinformation oder eine von der Lageinformation abgeleitete Information einem Fahrer des ersten Kraftfahrzeugs und/oder einem Fahrer des zweiten Kraftfahrzeugs mittels zumindest einer Anzeigeeinrichtung der weiteren Einrichtung angezeigt wird. So kann der oder die Fahrer beispielsweise über einen Abstand zwischen den beiden Kraftfahrzeugen informiert werden, um allgemein ein verbessertes Gefühl für das Verhalten des Abschlepp-Gespannes zu entwickeln.

Das hat den Vorteil, dass jeweilige Fahrer unverbindlich und präventiv über eine Eigenschaft des Abschlepp-Gespanns informiert werden können. Beispielsweise kann so der Fahrer darüber informiert werden, dass nunmehr eine Breite des Abschlepp-Gespanns größer ist als die Breite, die er von seinem eigenen Kraftfahrzeug gewohnt ist und so bereits vor einem Auftreten kritischer Situationen sein Fahrverhalten anpassen.

In einer weiteren vorteilhaften Ausführungsform ist vorgesehen, dass durch eine Recheneinrichtung der weiteren Einrichtung die bereitgestellte Lageinformation mit einer in der Recheneinrichtung hinterlegten Referenzlageinformation verglichen wird und in Abhängigkeit von einem Vergleichsergebnis eine beispielsweise optische und/oder akustische und/oder haptische Warnung an den Fahrer des ersten Kraftfahrzeugs und/oder den Fahrer des zweiten Kraftfahrzeugs ausgegeben wird. Beispielsweise kann die Warnung über eine Anzeigeeinrichtung der weiteren Einrichtung ausgegeben werden. Unter einer Warnung kann hier im Gegensatz zur bloßen Information eine Information mit einer impliziten und/oder expliziten Handlungsaufforderung verstanden werden.

Das hat den Vorteil, dass zumindest ein kritischer Parameter, insbesondere ein Fahrparameter wie beispielsweise der eingangs genannte Abstand zwischen den beiden Kraftfahrzeugen, überwacht werden kann und über die Warnung die jeweiligen Fahrer im Vorfeld einer kritischen Situation gewarnt werden können und so die Sicherheit im Straßenverkehr weiter erhöht wird.

In einer weiteren besonders vorteilhaften Ausführungsform ist es dabei vorgesehen, dass durch die eine oder eine andere Recheneinrichtung der weiteren Einrichtung die bereitgestellte Lageinformation mit einer in der Recheneinrichtung hinterlegten Referenzlageinformation verglichen wird und in Abhängigkeit von einem Vergleichsergebnis das Fahrerassistenzsystem in ein Fahrverhalten des ersten oder des zweiten Kraftfahrzeugs selbständig eingreift. Es kann somit durch das Fahrerassistenzsystem ein teilautonomer Fahrbetrieb während des Abschleppens realisiert werden.

Das hat den Vorteil, dass ein besonders schneller Eingriff in das Fahrverhalten des jeweiligen Kraftfahrzeugs möglich ist, was gerade bei dem bei einem Abschleppen vorliegenden besonders geringen Abstand zwischen den beiden Kraftfahrzeugen zur verbesserten Sicherheit im Straßenverkehr beiträgt.

In einer weiteren bevorzugten Ausführungsform ist vorgesehen, dass das andere Kraftfahrzeug, insbesondere das abgeschleppte Kraftfahrzeug, in Abhängigkeit von der bereitgestellten Lageinformation durch das Fahrerassistenzsystem, insbesondere durch das Fahrerassistenzsystem des zweiten Kraftfahrzeugs, autonom gesteuert wird. Hierfür kann beispielsweise ein entsprechender Mindestabstand zwischen den beiden Kraftfahrzeugen oder ein maximaler Versatz der beiden Kraftfahrzeuge vorgegeben werden.

Das hat den Vorteil, dass in dem abgeschleppten Kraftfahrzeug kein Fahrer erforderlich ist, und somit eine Gefährdung des Fahrers und etwaiger Insassen durch das nur bedingt einsatzbereite abgeschleppte Kraftfahrzeug reduziert wird.

In einer besonders vorteilhaften Ausführungsform ist vorgesehen, dass das Fahrerassistenzsystem ein übergeordnetes Master- oder Herren-Fahrerassistenzsystem, welches Teil des ersten Kraftfahrzeugs ist und eine erste Sensoreinrichtung mit einer ersten Radar-Sensoreinrichtung aufweist und ein dem Master-Fahrerassistenzsystem untergeordnetes Slave- oder Diener-Fahrerassistenzsystem, welches Teil des zweiten Kraftfahrzeugs ist und eine zweite Sensoreinrichtung, insbesondere eine zweite Radar-Sensoreinrichtung aufweist, umfasst, und das Master-Fahrerassistenzsystem mit dem Slave-Fahrerassistenzsystem (insbesondere drahtlos, beispielsweise über Radarsignale der Radar-Sensoreinrichtung) über eine Datenverbindung gekoppelt ist, sodass zumindest eine Funktion des Slave-Fahrerassistenzsystems durch das Master-Fahrerassistenzsystem gesteuert werden kann. Dadurch kann auch über die bereitgestellten jeweiligen Lageinformationen Redundanz, beispielsweise für einen ermittelten und bereitgestellten Abstand erreicht werden.

Das hat den Vorteil, dass eine Koordination der beiden Kraftfahrzeuge verbessert wird, und beispielsweise ein Kurvenlenkverhalten oder auch ein Abbremsen koordiniert werden kann. Dadurch wird wiederum die Sicherheit während des Abschleppens verbessert.

In einer weiteren vorteilhaften Ausführungsform ist vorgesehen, dass die erste Sensoreinrichtung im ersten Kraftfahrzeug zumindest einen heckseitigen Sensor aufweist und die zweite Sensoreinrichtung im zweiten Kraftfahrzeug zumindest einen frontseitigen Sensor aufweist und durch die Sensoreinrichtungen eine Umgebungsinformation über eine Umgebung des Abschleppgespanns erfasst und an das Master-Fahrerassistenzsystem bereitgestellt wird. Beispielsweise kann die Umgebungsinformation dabei auch mittelbar über das Slave-Fahrerassistenzsystem an das Master-Fahrerassistenzsystem bereitgestellt werden.

Das hat den Vorteil, dass dem Fahrer des abschleppenden Kraftfahrzeugs beziehungsweise des Abschleppgespanns durch das Master-Fahrerassistenzsystem bei einem Vorwärtsfahren, Rückwärtsfahren oder bei einem Abbiegen eine Unterstützung angeboten werden kann.

Die Erfindung betrifft auch ein Fahrerassistenzsystem für ein Kraftfahrzeug, mit einer Sensoreinrichtung, die in einem Normalbetriebsmodus und in einem vom Normalbetriebsmodus verschiedenen Abschleppmodus betreibbar ist. Dabei ist die Sensoreinrichtung ausgebildet, in dem Abschleppmodus ein in einem Abschlepp-Gespann mit einem ersten und einem zweiten Kraftfahrzeug hinter oder vor dem eigenen Kraftfahrzeug, welches das erste oder das zweite Kraftfahrzeug sein kann, angeordnetes anderes Kraftfahrzeug, welches das zweite oder das erste Kraftfahrzeug sein kann, zu erfassen und eine Lageinformation über das erfasste andere Kraftfahrzeug an eine weitere Einrichtung des Fahrerassistenzsystems bereitzustellen.

Vorteile und vorteilhafte Ausführungsformen des Fahrerassistenzsystems entsprechen hier Vorteilen und vorteilhaften Ausführungsformen des beschriebenen Verfahrens.

Die Erfindung betrifft auch ein Fahrerassistenzsystem, welches zum Durchführen eines erfindungsgemäßen Verfahrens oder einer vorteilhaften Ausführungsform des erfindungsgemäßen Verfahrens ausgebildet ist.

Die Erfindung betrifft ebenfalls ein Kraftfahrzeug mit einem der genannten Fahrerassistenzsysteme. Auch ein Abschlepp-Gespann mit zumindest einem solchen Kraftfahrzeug ist Teil der Erfindung.

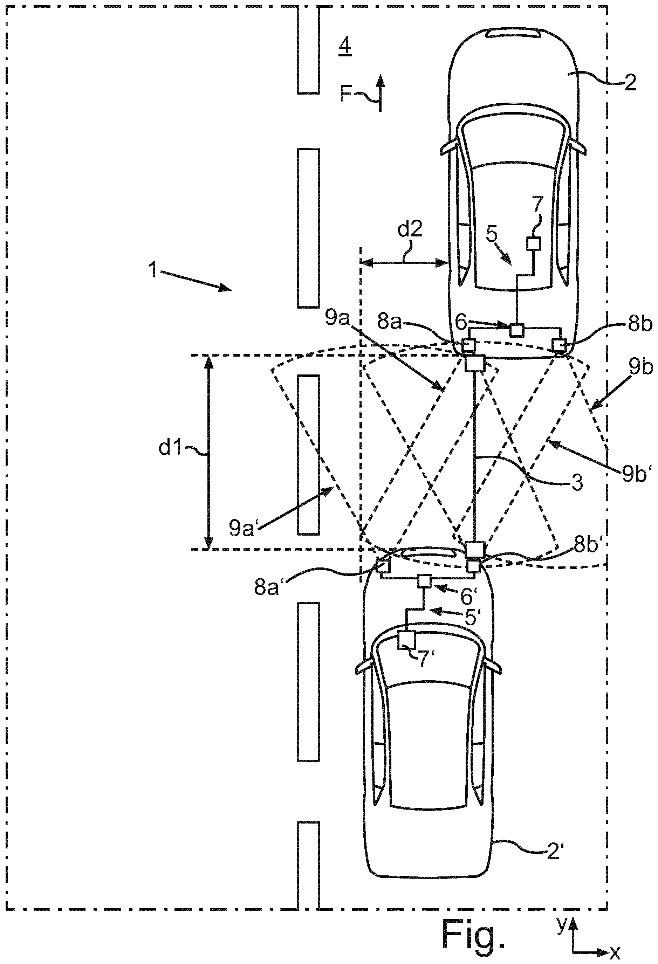

Ausführungsbeispiele der Erfindung werden nachfolgend anhand einer schematischen Zeichnung dargestellt. Dabei zeigt die einzige Fig. ein beispielhaftes Abschleppszenario mit entsprechenden beispielhaften Ausführungsformen jeweiliger Fahrerassistenzsysteme aus einer Vogelperspektive. Bei den im Zusammenhang mit den Figuren genannten Fahrzeugen handelt es sich um Kraftfahrzeuge. Dargestellt ist in der Fig. ein Abschlepp-Gespann 1 mit einem ersten Fahrzeug 2 und einem zweiten Fahrzeug 2', welche vorliegend durch ein Abschleppseil 3 mechanisch miteinander gekoppelt sind. Die beiden Fahrzeuge 2, 2' bewegen sich dabei in einer Fahrtrichtung F auf einer Straße 4. Dabei ist vorliegend das erste Fahrzeug 2 das abschleppende Fahrzeug und das zweite Fahrzeug 2' das abgeschleppte Fahrzeug.

Beide Fahrzeuge 2, 2' weisen hier dabei ein jeweiliges Fahrerassistenzsystem 5, 5' mit einer entsprechenden ersten und zweiten Sensoreinrichtung 6, 6' auf. Auch eine jeweilige erste und zweite weitere Einrichtung 7, 7' ist hier Teil des jeweiligen Fahrerassistenzsystems 5, 5'.

Die Sensoreinrichtungen 6, 6' umfassen vorliegend um jeweilige Radar-Sensoreinrichtungen, welche einerseits in einem Normalbetriebsmodus mit einer Frequenzbandbreite von 400 Megahertz ± 10 Prozent und in einem von dem Normalbetriebsmodus verschiedenen Abschleppmodus betreibbar sind, in welchem die Frequenzbandbreite erhöht wird, vorliegend auf 4 Gigahertz ± 10 Prozent. Damit wird die Abstandsauflösung der Sensoreinrichtung 6, 6' im Abschleppmodus im Vergleich zum Normalbetriebsmodus erhöht.

Die erste Sensoreinrichtung 6 weist dabei vorliegend zwei heckseitige Sensoren 8a, 8b, vorliegend Radarsensoren auf, welche an dem Heck des ersten Fahrzeugs 2 angeordnet sind. Die Sensoreinrichtung 6 ist dabei ausgebildet, in dem Abschleppmodus das in dem Abschleppgespann 1 hinter dem eigenen ersten Kraftfahrzeug oder Fahrzeug 2 angeordnete andere, zweite Kraftfahrzeug oder Fahrzeug 2' zu erfassen und eine Lageinformation, welche vorliegend einen Abstand d1 in y-Richtung und einen Versatz d2 in x-Richtung der beiden Fahrzeuge 2, 2' zueinander umfasst, über das erfasste zweite Fahrzeug 2', an die weitere Einrichtung 7 bereitzustellen. Die heckseitigen Sensoren 8a, 8b weisen dabei jeweilige Erfassungsbereiche 9a, 9b auf.

Entsprechend ist die zweite Sensoreinrichtung 6' ausgebildet, in dem Abschleppmodus das in dem Abschlepp-Gespann 1 vor dem eigenen zweiten Kraftfahrzeug oder Fahrzeug 2' angeordnete andere erste Fahrzeug 2 zu erfassen und eine Lageinformation, welche vorliegend einen Abstand d1 in y-Richtung und einen Versatz d2 in x-Richtung der beiden Fahrzeuge 2, 2' zueinander umfasst, über das erfasste andere erste Fahrzeug 2 an die zweite weitere Einrichtung 7' des Fahrerassistenzsystems 5' bereitzustellen.

Die entsprechende Lageinformation, hier der gemessene oder erfasste Abstand d1 und Versatz d2 kann dabei in den jeweiligen weiteren Einrichtungen 7, 7' mit einem in der weiteren Einrichtung 7, 7', beispielsweise einer Recheneinrichtung, hinterlegten Referenz-Lageinformation verglichen werden. Überschreitet dabei eine Abweichung zwischen der Lageinformation und der Referenz-Lageinformation einen vorgegebenen Wert, kann beispielsweise dem jeweiligen Fahrer des ersten oder zweiten Fahrzeugs 2, 2' eine Warnung ausgegeben werden. Somit kann beispielsweise das jeweilige Fahrerassistenzsystem den Fahrer des ersten Fahrzeugs 2 dabei unterstützten, das Verhalten des abgeschleppten zweiten Fahrzeugs 2 zu überwachen, ohne dieses ständig selber im Blick behalten zu müssen.

Dabei kann auch vorgesehen sein, dass die beiden Fahrerassistenzsysteme 5, 5' über eine Datenverbindung gekoppelt sind. Dies kann beispielsweise über ein elektrisches Kabel, oder aber über eine kabellose Kommunikation der Car-2-Car oder Radar-2-Radar-Verbindung realisiert sein. Dadurch kann die Lageinformation der jeweils einen Sensoreinrichtung 6, 6' auch an das jeweils andere Fahrerassistenzsystem 5', 5 beziehungsweise die jeweils andere weitere Einrichtung 7', 7 bereitgestellt werden.

Dabei kann vorgesehen sein, dass das Fahrerassistenzsystem 5 des ersten Fahrzeugs 2 als übergeordnetes Master-Fahrerassistenzsystem fungiert, und das zweite Fahrerassistenzsystem 5' des zweiten Fahrzeugs 2' als dem ersten Fahrerassistenzsystem 5 untergeordnetes Slave-Fahrerassistenzsystem. Damit kann einerseits eine Redundanz erreicht werden, da beispielsweise der Abstand d1 und der Versatz d2 jeweils in der von den beiden unterschiedlichen Sensoreinrichtungen 6, 6' bereitgestellten Lageinformation enthalten ist. Überdies kann so durch das erste Fahrerassistenzsystem 5 auch mittelbar über das zweite Fahrerassistenzsystem 5' das zweite Fahrzeug 2' gesteuert werden.

Es kann hier auch vorgesehen sein, dass zusätzlich das zweite Fahrzeug 2' oder die zweite Sensoreinrichtung 6' zumindest einen weiteren heckseitigen Sensor, der hier nicht dargestellt ist, umfasst sowie bevorzugt auch das erste Fahrzeug 2 oder die erste Sensoreinrichtung 6 zumindest einen weiteren frontseitigen Sensor aufweist. Damit kann das erste Fahrerassistenzsystem 5 mit dem weiteren frontseitigen Sensor über die zweite Sensoreinrichtung 6' mit den frontseitigen Sensoren 8a', 8b' sowie dem hier nicht eingezeichneten hinteren heckseitigen Sensor das gesamte Umfeld des Abschlepp-Gespanns 1 überwachen. Damit kann über die gekoppelten Radar-Sensoreinrichtungen 6, 6' der beiden Fahrzeuge 2, 2' dem Fahrer des ersten Fahrzeugs 2 sowohl beim Vorwärts- als auch beim Rückwärtsfahren oder auch bei einem Abbiegen durch das Fahrerassistenzsystem 5, 5' eine bestmögliche Unterstützung zukommen.

## Patentansprüche

1. Verfahren zum Betreiben eines Fahrerassistenzsystems (5, 5') zumindest eines Kraftfahrzeugs (2, 2') in einem Abschlepp-Gespann (1) mit einem ersten abschleppenden Kraftfahrzeug (2) und einem zweiten abgeschleppten Kraftfahrzeug (2'), mit den Verfahrensschritten:
- Aktivieren eines von einem Normalbetriebsmodus verschiedenen Abschleppmodus zumindest einer Sensoreinrichtung (6, 6') des Fahrerassistenzsystems (5, 5');
- Erfassen des in dem Abschlepp-Gespann (1) hinter oder vor dem eigenen Kraftfahrzeug (2, 2') angeordneten anderen Kraftfahrzeugs (2', 2) durch die in einen Abschleppmodus versetzte zumindest eine Sensoreinrichtung (6, 6');
- Bereitstellen einer Lage-Information über das erfasste andere Kraftfahrzeug (2', 2) an eine weitere Einrichtung (7, 7') des Fahrerassistenzsystems (5, 5') durch die Sensoreinrichtung (6, 6'),
**dadurch gekennzeichnet, dass**
- die Sensoreinrichtung (6, 6') eine Radar-Sensoreinrichtung aufweist, welche in dem Abschleppmodus mit einer im Vergleich zum Normalbetriebsmodus erhöhten Frequenzbandbreite betrieben wird.

2. Verfahren nach einem der vorhergehenden Ansprüche,
**dadurch gekennzeichnet, dass**
die Sensoreinrichtung (6, 6') an dem ersten Kraftfahrzeug (2) angeordnet ist und das zweite Kraftfahrzeug (2') durch zumindest einen heckseitigen Sensor des ersten Kraftfahrzeugs (2) erfasst wird.

3. Verfahren nach einem der vorhergehenden Ansprüche,
**dadurch gekennzeichnet, dass**
die Sensoreinrichtung (6, 6') an dem zweiten Kraftfahrzeug (2') angeordnet ist und das erste Kraftfahrzeug (2) durch zumindest einen frontseitigen Sensor des zweiten Kraftfahrzeugs (2') erfasst wird.

4. Verfahren nach einem der vorhergehenden Ansprüche,
**dadurch gekennzeichnet, dass**
die bereitgestellte Lage-Information einen Abstand (d1) des anderen Kraftfahrzeugs (2', 2) zu dem eigenen Kraftfahrzeug (2, 2') und/oder eine Veränderung des Abstands (d1) und/oder eine relative Geschwindigkeit des anderen Kraftfahrzeugs (2', 2) zu dem eigenen Kraftfahrzeug (2, 2') und/oder einen seitlichen Versatz (d2) des anderen Kraftfahrzeugs (2', 2) zu dem eigenen Kraftfahrzeug (2, 2') und/oder eine Breite des anderen Kraftfahrzeugs (2', 2) und/oder eine Höhe des anderen Kraftfahrzeugs (2', 2) und/oder einen Winkel zwischen den Fahrzeuglängsachsen der beiden Kraftfahrzeuge (2, 2') umfasst.

5. Verfahren nach einem der vorhergehenden Ansprüche,
**dadurch gekennzeichnet, dass**
die Lage-Information an zumindest eine weitere Einrichtung (7, 7') des eigenen Kraftfahrzeugs (2, 2') oder des anderen Kraftfahrzeugs (2', 2) bereitgestellt wird, insbesondere über eine drahtlose Datenverbindung.

6. Verfahren nach einem der vorhergehenden Ansprüche,
**dadurch gekennzeichnet, dass**
die bereitgestellte Lage-Information oder eine von der Lage-Information abgeleitete Information einem Fahrer des ersten Kraftfahrzeugs (2) und/oder einem Fahrer des zweiten Kraftfahrzeugs (2') mittels zumindest einer Anzeigeeinrichtung der weiteren Einrichtung (7, 7') angezeigt wird.

7. Verfahren nach einem der vorhergehenden Ansprüche,
**dadurch gekennzeichnet, dass**
durch eine Recheneinrichtung der weiteren Einrichtung (7, 7') die bereitgestellte Lage-Information mit einer in der Recheneinrichtung hinterlegten Referenz-Lage-Information verglichen wird und in Abhängigkeit von einem Vergleichsergebnis eine Warnung an den Fahrer des ersten Kraftfahrzeugs (2) und/oder an den Fahrer des zweiten Kraftfahrzeugs (2') ausgegeben wird.

8. Verfahren nach einem der vorhergehenden Ansprüche,
**dadurch gekennzeichnet, dass**
durch die Recheneinrichtung der weiteren Einrichtung (7, 7') die bereitgestellte Lage-Information mit einer in der Recheneinrichtung hinterlegten Referenz-Lage-Information verglichen wird und in Abhängigkeit von einem Vergleichsergebnis das Fahrerassistenzsystem in ein Fahrverhalten des ersten Kraftfahrzeugs (2) und/oder des zweiten Kraftfahrzeugs (2') eingreift.

9. Verfahren nach einem der vorhergehenden Ansprüche,
**dadurch gekennzeichnet, dass**
das andere Kraftfahrzeug (2', 2) in Abhängigkeit von der bereitgestellten Lage-Information durch das Fahrerassistenzsystem (5, 5') während des Abschleppens teilautonom gesteuert wird.

10. Verfahren nach einem der vorhergehenden Ansprüche,
**dadurch gekennzeichnet, dass**
das Fahrerassistenzsystem (5, 5') ein übergeordnetes Master-Fahrerassistenzsystem (5), welches Teil des ersten Kraftfahrzeugs (2) ist und eine erste Sensoreinrichtung (6) aufweist, und ein untergeordnetes Slave-Fahrerassistenzsystem (5'), welches Teil des zweiten Kraftfahrzeugs (2') ist und eine zweite Sensoreinrichtung (6') aufweist, umfasst, und das Master-Fahrerassistenzsystem (5) mit dem Slave-Fahrerassistenzsystem (5') gekoppelt ist, sodass zumindest eine Funktion des Slave-Fahrerassistenzsystems (5') durch das Master-Fahrerassistenzsystem (5) gesteuert wird.

11. Verfahren nach Anspruch 10,
**dadurch gekennzeichnet, dass**
die Sensoreinrichtung (6) im ersten Kraftfahrzeug (2) zumindest einen heckseitigen Sensor (8a, 8b) aufweist und die Sensoreinrichtung (6, 6') im zweiten Kraftfahrzeug (2') zumindest einen frontseitigen Sensor (8a', 8b') aufweist und durch die Sensoreinrichtungen (6, 6') eine Umgebung-Information über eine Umgebung des Abschlepp-Gespanns (1) erfasst und an das Master-Fahrerassistenzsystem (5) bereitgestellt wird.

12. Fahrerassistenzsystem (5, 5') für ein Kraftfahrzeug (2, 2'), mit einer Sensoreinrichtung (6, 6'), die in einem Normalbetriebsmodus und in einem vom Normalbetriebsmodus verschiedenen Abschleppmodus betreibbar ist sowie eine Radar-Sensoreinrichtung aufweist, wobei die Radar-Sensoreinrichtung in dem Abschleppmodus mit einer im Vergleich zum Normalbetriebsmodus erhöhten Frequenzbandbreite betreibbar ist, und
die Sensoreinrichtung (6, 6') ausgebildet ist, in dem Abschleppmodus ein in einem Abschlepp-Gespann (1) hinter oder vor dem eigenen Kraftfahrzeug (2, 2') angeordnetes anderes Kraftfahrzeug (2', 2) zu erfassen und eine Lage-Information über das erfasste andere Kraftfahrzeug (2', 2) an eine weitere Einrichtung (7, 7') des Fahrerassistenzsystems (5, 5') bereitzustellen.

13. Kraftfahrzeug (2, 2') mit einem Fahrerassistenzsystem (5, 5') nach Anspruch 12.

## Claims

1. Method for operating a driver assistance system (5, 5') of at least one motor vehicle (2, 2') in a towing combination (1) comprising a first towing motor vehicle (2) and a second towed motor vehicle (2'), comprising the steps:
- activation of a towing mode, which differs from a normal operating mode, of at least one sensor device (6, 6') of the driver assistance system (5, 5');
- detection by the at least one sensor device (6, 6') set to a towing mode of the other motor vehicle (2', 2') arranged behind or in front of the motor vehicle (2, 2') in question in the towing combination (1);
- provision of position information concerning the detected other motor vehicle (2', 2) to a further device (7, 7') of the driver assistance system (5, 5') by the sensor device (6, 6'),
**characterised in that**
- the sensor device (6, 6') has a radar sensor device, which is operated in the towing mode with an increased frequency bandwidth compared with the normal operating mode.

2. Method according to any one of the preceding claims,
**characterised in that**
the sensor device (6, 6') is arranged on the first motor vehicle (2) and the second motor vehicle (2') is detected by at least one rear sensor of the first motor vehicle (2).

3. Method according to any one of the preceding claims,
**characterised in that**
the sensor device (6, 6') is arranged on the second motor vehicle (2') and the first motor vehicle (2) is detected by at least one front sensor of the second motor vehicle (2').

4. Method according to any one of the preceding claims,
**characterised in that**
the provided position information comprises a distance (d1) of the other motor vehicle (2', 2) from the motor vehicle (2, 2') in question and/or a change in the distance (d1) and/or a relative speed of the other motor vehicle (2', 2) to the motor vehicle (2, 2') in question and/or a lateral displacement (d2) of the other motor vehicle (2', 2) relative to the motor vehicle (2, 2') in question and/or a width of the other motor vehicle (2', 2) and/or a height of the other motor vehicle (2', 2) and/or an angle between the longitudinal axes of the two motor vehicles (2, 2').

5. Method according to any one of the preceding claims,
**characterised in that**
the position information is provided to at least one further device (7, 7') of the motor vehicle (2, 2') in question or of the other motor vehicle (2', 2), in particular via a wireless data connection.

6. Method according to any one of the preceding claims,
**characterised in that**
the position information provided or information derived from the position information is displayed to a driver of the first motor vehicle (2) and/or a driver of the second motor vehicle (2') by means of at least one display device of the further device (7, 7').

7. Method according to any one of the preceding claims,
**characterised in that**
the provided position information is compared by a computing device of the further device (7, 7') with reference position information stored in the computing device, and depending on the result of the comparison a warning is output to the driver of the first motor vehicle (2) and/or to the driver of the second motor vehicle (2').

8. Method according to any one of the preceding claims,
**characterised in that**
the computing device of the further device (7, 7') compares the provided position information with reference position information stored in the computing device, and depending on the result of the comparison the driver assistance system intervenes in a driving behaviour of the first motor vehicle (2) and/or of the second motor vehicle (2').

9. Method according to any one of the preceding claims,
**characterised in that**
the other motor vehicle (2', 2) is controlled, depending on the provided position information, semi-autonomously by the driver assistance system (5, 5').

10. Method according to any one of the preceding claims,
**characterised in that**
the driver assistance system (5, 5') comprises a superordinate master driver assistance system (5), which is part of the first motor vehicle (2) and has a first sensor device (6), and a subordinate slave driver assistance system (5'), which is part of the second motor vehicle (2') and has a second sensor device (6'), and the master driver assistance system (5) is coupled to the slave driver assistance system (5'), so that at least one function of the slave driver assistance system (5') is controlled by the master driver assistance system (5).

11. Method according to claim 10,
**characterised in that**
the sensor device (6) in the first motor vehicle (2) has at least one rear sensor (8a, 8b) and the sensor device (6, 6') in the second motor vehicle (2') has at least one front sensor (8a', 8b') and environment information concerning an environment of the towing combination (1) is detected by the sensor devices (6, 6') and provided to the master driver assistance system (5).

12. Driver assistance system (5, 5') for a motor vehicle (2, 2'), comprising a sensor device (6, 6') which can be operated in a normal operating mode and in a towing mode that is different from the normal operating mode and has a radar sensor device, wherein
the radar sensor device can be operated in the towing mode with an increased frequency bandwidth compared with the normal operating mode, and
the sensor device (6, 6') is configured in the towing mode to detect another motor vehicle (2', 2) arranged behind or in front of the motor vehicle (2, 2') in question in a towing combination (1), and to provide position information concerning the detected other motor vehicle (2', 2) to a further device (7, 7') of the driver assistance system (5, 5').

13. Motor vehicle (2, 2') comprising a driver assistance system (5, 5') according to claim 12.

## Revendications

1. Procédé de fonctionnement d'un système d'assistance au conducteur (5, 5') au moins d'un véhicule automobile (2, 2') dans un attelage de remorquage (1) avec un premier véhicule automobile (2) remorquant et un second véhicule automobile (2') remorqué, avec les étapes de procédé :
- l'activation d'un mode de remorquage différent d'un mode de fonctionnement normal au moins d'un dispositif capteur (6, 6') du système d'assistance au conducteur (5, 5') ;
- la détection de l'autre véhicule automobile (2', 2) agencé dans l'attelage de remorquage (1) derrière ou devant le propre véhicule automobile (2, 2') par l'au moins un dispositif capteur (6,6') amené dans un mode de remorquage ;
- la fourniture d'une information de position sur l'autre véhicule automobile (2', 2) détecté à un autre dispositif (7, 7') du système d'assistance au conducteur (5, 5') par le dispositif capteur (6, 6'),
**caractérisé en ce que**
- le dispositif capteur (6, 6') présente un dispositif capteur à radar qui fonctionne dans le mode de remorquage avec une largeur de bande de fréquence augmentée par rapport au mode de fonctionnement normal.

2. Procédé selon l'une quelconque des revendications précédentes,
**caractérisé en ce que**
le dispositif capteur (6, 6') est agencé au niveau du premier véhicule automobile (2) et le second véhicule automobile (2') est détecté par au moins un capteur côté arrière du premier véhicule automobile (2).

3. Procédé selon l'une quelconque des revendications précédentes,
**caractérisé en ce que**
le dispositif capteur (6, 6') est agencé au niveau du second véhicule automobile (2') et le premier véhicule automobile (2) est détecté par au moins un capteur côté avant du second véhicule automobile (2').

4. Procédé selon l'une quelconque des revendications précédentes,
**caractérisé en ce que**
l'information de position fournie comprend une distance (d1) de l'autre véhicule automobile (2', 2) par rapport au propre véhicule automobile (2, 2') et/ou une modification de la distance (d1) et/ou une vitesse relative de l'autre véhicule automobile (2', 2) par rapport au propre véhicule automobile (2, 2') et/ou un déport latéral (d2) de l'autre véhicule automobile (2', 2) par rapport au propre véhicule automobile (2, 2') et/ou une largeur de l'autre véhicule automobile (2', 2) et/ou une hauteur de l'autre véhicule automobile (2', 2) et/ou un angle entre les axes longitudinaux de véhicule des deux véhicules automobiles (2, 2').

5. Procédé selon l'une quelconque des revendications précédentes,
**caractérisé en ce que**
l'information de position est fournie à au moins un autre dispositif (7, 7') du propre véhicule automobile (2, 2') ou de l'autre véhicule automobile (2', 2), en particulier par le biais d'une liaison de données sans fil.

6. Procédé selon l'une quelconque des revendications précédentes,
**caractérisé en ce que**
l'information de position fournie ou une information dérivée de l'information de position est affichée à un conducteur du premier véhicule automobile (2) et/ou à un conducteur du second véhicule automobile (2') au moyen d'au moins un dispositif d'affichage de l'autre dispositif (7, 7').

7. Procédé selon l'une quelconque des revendications précédentes,
**caractérisé en ce que**
par le biais d'un dispositif informatique de l'autre dispositif (7, 7'), l'information de position fournie est comparée avec une information de position de référence enregistrée dans le dispositif informatique et en fonction d'un résultat de comparaison un avertissement est transmis au conducteur du premier véhicule automobile (2) et/ou au conducteur du second véhicule automobile (2').

8. Procédé selon l'une quelconque des revendications précédentes,
**caractérisé en ce que**
par le biais du dispositif informatique de l'autre dispositif (7, 7'), l'information de position fournie est comparée avec une information de position de référence enregistrée dans le dispositif informatique et en fonction d'un résultat de comparaison le système d'assistance au conducteur intervient dans un comportement de conduite du premier véhicule automobile (2) et/ou du second véhicule automobile (2').

9. Procédé selon l'une quelconque des revendications précédentes,
**caractérisé en ce que**
l'autre véhicule automobile (2', 2) est commandé de manière partiellement autonome en fonction de l'information de position fournie par le système d'assistance au conducteur (5, 5') pendant le remorquage.

10. Procédé selon l'une quelconque des revendications précédentes,
**caractérisé en ce que**
le système d'assistance au conducteur (5, 5') comprend un système d'assistance au conducteur maître (5) supérieur qui fait partie du premier véhicule automobile (2) et présente un premier dispositif capteur (6), et un système d'assistance au conducteur esclave (5') inférieur qui fait partie du second véhicule automobile (2') et présente un second dispositif capteur (6'), et le système d'assistance au conducteur maître (5) est couplé au système d'assistance au conducteur esclave (5') de sorte qu'au moins une fonction du système d'assistance au conducteur esclave (5') soit commandée par le système d'assistance au conducteur maître (5).

11. Procédé selon la revendication 10,
**caractérisé en ce que**
le dispositif capteur (6) dans le premier véhicule automobile (2) présente au moins un capteur (8a, 8b) côté arrière et le dispositif capteur (6, 6') dans le second véhicule automobile (2') présente au moins un capteur (8a', 8b') côté avant et une information d'environnement sur un environnement de l'attelage de remorquage (1) est détectée par les dispositifs capteurs (6, 6') et est fournie au système d'assistance au conducteur maître (5).

12. Système d'assistance au conducteur (5, 5') pour un véhicule automobile (2, 2') avec un dispositif capteur (6, 6') qui fonctionne dans un mode de fonctionnement normal et dans un mode de remorquage différent du mode de fonctionnement normal ainsi que présente un dispositif capteur à radar, dans lequel
le dispositif capteur à radar peut fonctionner dans le mode de remorquage avec une largeur de bande de fréquence augmentée par rapport au mode de fonctionnement normal, et
le dispositif capteur (6, 6') est réalisé afin de détecter dans le mode de remorquage un autre véhicule automobile (2', 2) agencé dans un attelage de remorquage (1) derrière ou devant le propre véhicule automobile (2, 2') et de fournir une information de position sur l'autre véhicule automobile (2', 2) détecté à un autre dispositif (7, 7') du système d'assistance au conducteur (5, 5').

13. Véhicule automobile (2, 2') avec un système d'assistance au conducteur (5, 5') selon la revendication 12.
